(19) **Europäisches Patentamt European Patent Office Office européen des brevets**

(11) **EP 1 588 563 B1**

(12) **FASCICULE DE BREVET EUROPEEN**

(45) Date de publication et mention de la délivrance du brevet:
**06.10.2010 Bulletin 2010/40**

(51) Int Cl.:
**H04N 7/26** (2006.01)

(21) Numéro de dépôt: **03810003.8**

(22) Date de dépôt: **19.12.2003**

(86) Numéro de dépôt international:
**PCT/FR2003/050192**

(87) Numéro de publication internationale:
**WO 2004/062287 (22.07.2004 Gazette 2004/30)**

(54) **PROTECTION ADAPTATIVE ET PROGRESSIVE D'IMAGES FIXES CODEES EN ONDELETTES**

ADAPTIVER UND PROGRESSIVER SCHUTZ VON WAVELET-CODIERTEN BILDERN

ADAPTIVE AND GRADUAL PROTECTION OF FIXED IMAGES WHICH ARE CODED IN WAVELETS

(84) Etats contractants désignés:
**AT BE BG CH CY CZ DE DK EE ES FI FR GB GR HU IE IT LI LU MC NL PT RO SE SI SK TR**

(30) Priorité: **31.12.2002 FR 0216916**

(43) Date de publication de la demande:
**26.10.2005 Bulletin 2005/43**

(73) Titulaire: **Querell Data Limited Liability Company Dover, DE 19904 (US)**

(72) Inventeurs:
• **LECOMTE, Daniel**
  **F-75116 PARIS (FR)**
• **PARAYRE-MITZOVA, Daniela**
  **F-75018 PARIS (FR)**
• **CAPOROSSI, Jérôme**
  **F-92340 BOURG-LA-REINE (FR)**

(74) Mandataire: **Kazi, Ilya**
  **Mathys & Squire LLP**
  **120 Holborn**
  **London EC1N 2SQ (GB)**

(56) Documents cités:
**EP-A- 1 033 880**

• **ZENG W ET AL: "EFFICIENT FREQUENCY DOMAIN VIDEO SCRAMBLING FOR CONTENT ACCESS CONTROL" ACM MULTIMEDIA, PROCEEDINGS OF THE INTERNATIONAL CONFERENCE, NEW YORK, NY, US, 30 octobre 1999 (1999-10-30), pages 285-294, XP000956270 cité dans la demande**

• **CHANG-TSUN LI ET AL: "Image authentication and integrity verification via content-based watermarks and a public key cryptosystem" PROCEEDINGS 2000 INTERNATIONAL CONFERENCE ON IMAGE PROCESSING (CAT. NO.00CH37101), PROCEEDINGS OF 7TH IEEE INTERNATIONAL CONFERENCE ON IMAGE PROCESSING, VANCOUVER, BC, CANADA, 10-13 SEPT. 2000, vol. 3, 10 septembre 2000 (2000-09-10), pages 694-697, XP010529562 2000, Piscataway, NJ, USA, IEEE, USA ISBN: 0-7803-6297-7**

• **WEE S J W ET AL: "SECURE SCALABLE VIDEO STREAMING FOR WIRELESS NETWORKS" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY: IEEE, US, vol. 6 OF 6, 7 mai 2001 (2001-05-07), pages 2049-2052, XP001109759 ISBN: 0-7803-7041-4**

• **LI GONG ET AL: "Elements of trusted multicasting" NETWORK PROTOCOLS, 1994. PROCEEDINGS., 1994 INTERNATIONAL CONFERENCE ON BOSTON, MA, USA 25-28 OCT. 1994, LOS ALAMITOS, CA, USA,IEEE COMPUT. SOC, 25 octobre 1994 (1994-10-25), pages 23-30, XP010100693 ISBN: 0-8186-6685-4**

**Description**

La présente invention se rapporte au domaine du traitement d'images numériques codées en ondelettes.

On se propose dans la présente invention de fournir un système permettant d'embrouiller visuellement et de recomposer le contenu d'une image fixe numérique codée en ondelettes.

Le problème général est de fournir un procédé capable de transmettre de façon sécurisée des données numériques correspondant à des images de haute qualité à un format numérique quelconque, issu d'un codage en ondelettes, en direct ou en différé vers un écran de visualisation et/ou pour être enregistré sur le disque dur ou tout autre dispositif de sauvegarde appartenant à un boîtier reliant le réseau de télétransmission à un écran de type moniteur ou écran de télévision; tout en préservant la qualité visuelle mais en évitant toute utilisation frauduleuse comme la possibilité de faire des copies pirates des images codées numériquement et enregistrées sur le support de sauvegarde dudit boîtier décodeur.

Les techniques classiques de cryptage consistent de manière générale à combiner (selon des opérations de type addition ou soustraction) avec les données d'origine des valeurs générées de manière pseudo-aléatoire et à partir d'une clé d'initialisation (clé de cryptage). La simple possession de cette clé permet ainsi le décryptage complet des données cryptées, celles-ci contenant en substance la totalité de l'information originale.

Dans la demande de brevet européenne référencée EP 1011269A1 et intitulé « System for processing an information signal », les auteurs détaillent une méthode de cryptage d'un signal d'information pouvant s'appliquer au cas des images fixes. La méthode consiste à ajouter au signal original non compressé un bruit pseudo-aléatoire de manière à obtenir un nouveau signal. Le signal ainsi crypté est ensuite compressé à l'aide des algorithmes standards adéquats puis transmis. La clé est quant à elle transmise de manière sécurisée à destination du futur utilisateur du signal crypté. Les auteurs indiquent que cette méthode peut s'appliquer au cas des images codées selon la norme JPEG.

Il n'est fait dans ce document de l'art antérieur aucune référence au cas des images codées par ondelettes. De plus, la possession de la clé conditionne totalement le décryptage du signal transmis.

Dans le brevet européen référencé EP 0920209A1, les auteurs décrivent deux procédés de brouillage ainsi que leurs procédés de désembrouillage associés afin de protéger des données vidéos numériques codées selon le standard MPEG-2. Ces procédés agissent sur au moins un bloc de coefficients DC et AC issus de la transformée DCT et pour au moins une image intra I. Selon le premier procédé, l'ensemble des coefficients AC d'au moins un bloc de coefficients (DC, AC) d'au moins une image I subissent une permutation de rang R. Le procédé de désembrouillage associé consiste à transmettre le paramètre R afin d'effectuer la permutation inverse et restituer le flux MPEG-2 original. L'ensemble des données originales est donc toujours présent dans le flux protégé. Selon le second procédé, le coefficient DC d'au moins un bloc de coefficients (DC, AC) d'au moins une image I est recalculé à partir de l'original à l'aide d'une commande d'action C pouvant être aléatoire. Néanmoins, pour le désembrouillage, toutes les données de reconstitution dudit flux original (le rang R, les coefficients DC originaux cryptés à l'aide d'une clé), ainsi que toutes les données constituant le flux original sont comprises dans ledit flux MPEG-2 protégé et sont envoyées ensemble et par la même voie, ledit flux MPEG-2 protégé contenant les informations pour la reconstruction étant l'unique donnée de sortie du processus d'embrouillage. Par conséquent, cet art antérieur ne répond pas aux critères de haute sécurité, objets de la présente invention.

Une autre référence de l'art antérieur est un article écrit par Zeng W et al., publié dans ACM Multimedia Proceedings of the International Conference en octobre 1999 et intitulé « Efficient Frequency Domain Video Scrambling for Content Access Control » ; dans cet article, les auteurs décrivent une méthode de protection de données numériques codant un contenu multimédia. La méthode repose sur un ensemble de trois opérations pseudo aléatoires de base (inversion de bit, permutation et rotation de bloc de coefficients) pouvant être combinées et contrôlées par des clés de cryptage. L'ensemble du contenu réside donc dans le flux protégé et peut être accédé à partir des clés de cryptage qui seront transmises aux utilisateurs autorisés. Dans cet art antérieur, l'ensemble des données originales sont présentes dans le flux protégé et l'accès au contenu original est entièrement conditionné par la possession ou non de clés de cryptage. Cet art antérieur ne résout donc pas le problème de la sécurité traitée dans la présente invention.

La présente invention se rapporte plus particulièrement à un dispositif capable de transmettre de façon sécurisée un ensemble d'images numériques de haute qualité visuelle vers un afficheur et/ou pour être enregistrées dans la mémoire du dispositif de sauvegarde d'un boîtier reliant le réseau de télétransmission à l'afficheur, tout en préservant la qualité visuelle mais en évitant la possibilité que ces images puissent être copiées de manière illicite.

L'invention concerne un procédé pour la distribution sécurisée d'images fixes numériques selon un format nominal issu du codage en ondelettes, représentées par un flux binaire constitué d'au moins un paquet (relatif à l'organisation de la séquence binaire) contenant au moins un bloc regroupant des éléments simples (par exemple des coefficients) codés numériquement selon un mode précisé à l'intérieur du flux concerné et utilisé par tous les décodeurs capables de le restituer ou de le décoder afin de pouvoir l'afficher correctement. Ce procédé comporte :

- une étape préparatoire consistant à modifier au moins un desdits éléments simples selon au moins une opération de substitution consistant en l'extraction de cet élément simple, suivi de son remplacement par une donnée appelée leurre,

- une étape de transmission

    - d'un flux principal conforme au format nominal, constitué par les blocs et paquets modifiés au cours de l'étape préparatoire et
    - par une voie séparée dudit flux principal d'une information numérique complémentaire permettant de reconstituer le flux original à partir du calcul sur l'équipement destinataire, en fonction dudit flux principal et de ladite information complémentaire. On définit ladite information complémentaire en tant qu'un ensemble constitué de données (par exemples des coefficients décrivant le flux numérique original ou extraits du flux original) et de fonctions (par exemple, la fonction substitution ou permutation). Une fonction est définie comme contenant au moins une instruction mettant en rapport des données et des opérateurs. Ladite information complémentaire décrit les opérations à effectuer pour récupérer le flux original à partir dudit flux modifié.

Dans la présente invention, on définit la notion de « flux » comme une séquence binaire structurée, constituée d'élément simples et ordonnés représentant sous forme codée des données et répondant à un standard ou à une norme audiovisuels donnés.

Le fait d'avoir enlevé une partie des données originales du flux d'origine lors de la génération du flux principal modifié, ne permet pas la restitution dudit flux d'origine à partir des seules données dudit flux principal modifié. Le flux principal modifié est alors appelé « flux sécurisé ». La « distribution sécurisée » est une distribution de flux sécurisés.

Dans la présente invention, on entend par le terme « embrouillage » la modification d'un flux binaire numérique selon des méthodes appropriées de manière à ce que ce flux reste conforme au standard avec lequel il a été encodé numériquement, tout en le rendant affichable sur un écran, mais altéré du point de vue de la perception visuelle humaine.

Dans la présente invention, on entend sous le terme « désembrouillage » le processus de restitution par des méthodes appropriées du flux initial, le flux binaire restitué après le désembrouillage étant identique, donc sans perte, au flux binaire initial.

Avantageusement, le flux binaire restitué après le désembrouillage a une taille différente du flux binaire initial, suite à l'ajout de données neutres pour le décodeur, mais reste conforme au standard ou à la norme du flux binaire initial, et fournit une image décodée visuellement et numériquement strictement identique à l'image décodée à partir du flux binaire initial.

On définit la notion « scalabilité granulaire » à partir de l'expression en anglais « granular scalability ». La propriété de scalabilité (« scalability ») caractérise un encodeur capable d'encoder ou un décodeur capable de décoder un ensemble ordonné de flux binaires de façon à produire ou reconstituer une séquence multi couches. On définit la granularité comme la quantité d'informations susceptible d'être transmise par couche d'un système caractérisé par une scalabilité quelconque, le système étant alors aussi qualifié de « granulaire ». On appelle également la scalabilité granulaire « scalabilité qualitative ».

La présente invention propose la protection de l'image numérique codée en ondelettes basée intégralement sur la structure du « flux de bits (bitstream) » (séquence binaire), protection qui consiste à modifier des parties ciblées du flux de bits (bitstream) relatives à la modélisation par ondelettes et ses caractéristiques. Les vraies valeurs sont extraites du flux de bits (bitstream) et sont stockées en tant qu'information complémentaire, et à leurs places sont mises des valeurs aléatoires ou calculées ou des valeurs permutées, de mêmes tailles que les valeurs originales, et cela pour la totalité du flux numérique. Avantageusement, lesdites valeurs de remplacement sont de taille différente des valeurs originales. Ainsi, l'embrouilleur rajoute des « leurres » pour le décodeur, qui reçoit en entrée un flux binaire complètement conforme au format numérique d'origine, mais à partir duquel l'image décodée et affichée n'est pas acceptable du point de vue de la perception visuelle humaine. Le module d'embrouillage effectue une analyse du flux de bits (bitstream) et sélectionne les endroits du flux de bits (bitstream) où il introduit des perturbations. On définit par modification l'action d'introduire de s perturbations. Une perturbation est définie comme étant un changement (par exemple changement de la valeur, inversion du signe, saturation, seuillage), ou une substitution par une valeur aléatoire ou calculée, ou une permutation. Le procédé d'embrouillage - désembrouillage réalisé est sans perte de qualité pour l'image originale.

Avantageusement, l'opération d'embrouillage est également réalisée avec un décodage - encodage partiel du flux de bits (bitstream) représentant l'image encodée. Les modifications sont alors directement appliquées sur les coefficients ondelettes décodés, les coefficients ondelettes originaux sont stockés en tant qu'information complémentaire et les coefficients ondelettes modifiés sont ré-encodés afin de générer un flux principal modifié conforme au standard ou à la norme du flux initial.

A l'inverse de la plupart des systèmes de cryptage déjà connus par l'homme de l'art, le principe décrit ci-dessous permet d'assurer un haut niveau de protection tout en réduisant le volume d'information nécessaire au décodage.

La protection, réalisée de façon conforme à l'invention, est basée sur le principe de suppression et de remplacement des informations codant le signal visuel original par une méthode quelconque, soit : substitution, modification, permutation ou déplacement de l'information. Cette protection est également basée sur la connaissance de la structure du flux à la sortie de l'encodeur visuel : l'embrouillage dépend du contenu dudit flux numérique.

La reconstitution du flux original s'effectue sur l'équipement destinataire à partir du flux principal modifié déjà présent ou disponible (par exemple sur un CD ou DVD) ou envoyé en temps réel sur l'équipement destinataire et de l'information complémentaire envoyée en temps réel au moment de la visualisation comprenant des données et des fonctions exécutées à l'aide de routines (ensemble d'instructions) numériques.

De plus, lorsque l'ordre des paquets au sein du flux principal modifié est changé selon une opération de transcodage après l'étape préparatoire et/ou avant, pendant ou après l'étape de transmission, l'information complémentaire stockée lors de l'étape préparatoire et transmise sur l'équipement destinataire, permet également de reconstituer le contenu original à partir du flux principal modifié.

De même, lorsqu'un sous-ensemble de paquets du flux principal modifié est reçu sur l'équipement destinataire, seule la partie de l'information complémentaire correspondant à ce sous-ensemble de paquets modifiés est transmise sur l'équipement destinataire.

Avantageusement, l'étape de reconstitution introduit selon un mode déterminé des données neutres pour le décodeur dans le flux reconstitué à partir du flux principal modifié et de l'information complémentaire, afin de modifier la taille du flux reconstitué tout en préservant sa conformité vis-à-vis de la norme ou du standard natif, ainsi que l'égalité numérique et qualitative de l'image décodée avec l'image décodée à partir du flux original.

Connaissant la manière dont sont effectués la modélisation, la compression et l'encodage en ondelettes de l'image par le codeur en ondelettes et/ou le standard ou la norme donnés, il est toujours possible d'extraire à partir du flux de bits (bitstream) les paramètres principaux qui le décrivent et qui sont envoyés au décodeur.

Une fois ces paramètres identifiés, ils sont modifiés de manière à ce que le flux numérique généré par le codeur et/ou le standard donnés soit modifié, mais conforme à ce codeur et/ou ce standard. Le flux binaire structuré représente l'image codée en ondelettes. Avantageusement, il peut représenter une succession d'images numériques issues d'un codage en ondelettes. Les modifications rendent l'image issue du décodage dudit flux inexploitable par l'utilisateur, car elle est embrouillée. Cependant, ledit flux peut être compris et interprété par le décodeur approprié, sans que ce dernier soit perturbé, et affiché sur un écran.

La modification d'une ou de plusieurs des composantes dudit flux numérique va provoquer une dégradation de l'image d'un point de vue visuel et la transformer en un signal complètement incompréhensible et désagréable du point de vue de la perception visuelle subjective humaine.

Afin de corriger les différents défauts de l'art antérieur, la présente invention concerne un procédé pour la distribution sécurisée d'images fixes numériques selon un format nominal issu du codage numérique en ondelettes, représentées par un flux original constitué d'au moins un paquet (relatif à l'organisation de la séquence binaire) contenant au moins un bloc regroupant des éléments simples (par exemple des coefficients) codés numériquement selon un mode précisé à l'intérieur du flux concerné et utilisé par tous les décodeurs capables de le restituer ou de le décoder afin de pouvoir afficher correctement l'image caractérisé en ce qu'il comporte :

- une étape préparatoire consistant à modifier au moins un desdits éléments simples selon au moins une opération de substitution consistant en l'extraction de cet élément simple, suivi de son remplacement par une donnée appelée leurre,
- une étape de transmission

  - d'un flux principal modifié conforme au format nominal, constitué par les blocs modifiés au cours de l'étape préparatoire et
  - par une voie séparée dudit flux principal d'une information numérique complémentaire permettant de reconstituer le flux original à partir du calcul, sur l'équipement destinataire, en fonction dudit flux principal et de ladite information complémentaire.

Dans une variante, le flux principal modifié est enregistré ou disponible sur l'équipement destinataire préalablement à la transmission de l'information complémentaire sur l'équipement destinataire.

Dans une autre variante, le flux principal modifié et l'information complémentaire sont transmis ensemble en temps réel au moment de la visualisation.

De plus, le format de flux nominal issu d'un codage en ondelettes est défini par un standard ou un codeur commun à une communauté d'utilisateurs.

Avantageusement, ce procédé comporte une étape d'analyse d'une partie au moins du flux original, ladite étape d'analyse déterminant la nature des modifications à apporter aux dits éléments simples.

De plus, l'étape de détermination de la modification des éléments simples à effectuer lors de ladite étape d'analyse prend en compte la structure concrète d'une partie au moins de l'image originale.

Selon un mode de réalisation, le procédé comporte une étape préalable de conversion analogique/numérique sous un format structuré, le procédé étant appliqué à un signal visuel analogique.

Avantageusement, l'information complémentaire comprend au moins une routine numérique apte à exécuter une fonction.

Selon un mode de mise en oeuvre, ladite étape préparatoire de modification est réalisée de façon adaptative sur ledit flux original en fonction d'une partie au moins des caractéristiques représentatives de la structure, du contenu et des paramètres de l'image originale, du profil du destinataire, et d'événements externes.

De plus, le flux principal modifié est conforme à la norme ou au standard natif du flux original.

Avantageusement, la taille du flux principal modifié est strictement égale à la taille du flux original.

Avantageusement, les modifications effectuées lors de ladite étape préparatoire sont réalisées directement sur les paquets du flux binaire initial regroupant des blocs d'éléments simples codés.

De préférence, les modifications effectuées lors de ladite étape préparatoire sont réalisées sur au moins un des éléments simples obtenu en décodant au moins un paquet du flux binaire initial.

Dans un mode de réalisation particulier, les modifications sont effectuées sur au moins une des couches de scalabilité spatiale des images fixes codées en ondelettes.

Dans un autre mode de réalisation, les modifications sont effectuées sur au moins une des couches de scalabilité qualitative des images fixes codées en ondelettes.

De préférence, des modifications sont effectuées sur au moins un ensemble d'au moins un élément simple en fonction des paramètres des modifications réalisées préalablement sur au moins un ensemble d'au moins un élément simple au sein du même flux.

Dans une variante, lesdites images fixes constituent une succession d'images dans le temps.

De plus, ladite modification desdits éléments simples est différente pour au moins deux images de ladite succession d'images.

Avantageusement, ladite modification des éléments simples d'une image de ladite succession d'images inclut la modification des éléments simples des images précédentes dans l'ordre temporel de la succession en se fondant sur les propriétés de scalabilité spatiale et qualitative des transformations en ondelettes.

Selon un mode de mise en oeuvre, ladite modification desdits éléments simples est appliquée sur une partie spatiale seulement de l'image, déterminée en se fondant sur les propriétés et les caractéristiques de la transformation en ondelettes.

Selon un autre mode de mise en oeuvre, ladite modification desdits éléments simples est appliquée sur au moins une composante spectrale issue de la transformée en ondelettes afin de cibler ainsi la partie du flux visuel à embrouiller.

Avantageusement, ce procédé est sans perte de qualité.

Selon un mode de réalisation, ce procédé comporte une étape supplémentaire de reconstitution dudit flux original comportant :

- une étape de reconstruction par application d'une fonction de reconstruction à partir d'une l'information complémentaire provenant d'une voie séparée du vecteur dudit flux principal ;
- une étape de décodage dudit flux reconstruit par un procédé adapté audit format nominal.

Dans un mode de mise en oeuvre, la taille du flux reconstitué sur l'équipement destinataire est égale à la taille du flux original.

Dans un autre mode de mise en oeuvre, la taille du flux reconstitué sur l'équipement destinataire est différente de celle du flux original.

Avantageusement, l'information complémentaire permet de reconstruire le flux original à partir du flux principal modifié dans lequel l'ordre des paquets a été changé lors d'une opération de transcodage réalisée après l'étape préparatoire et avant l'étape de reconstruction

L'invention concerne également un équipement pour la mise en oeuvre de ce procédé, comportant un encodeur selon ledit format nominal et des moyens de transmission d'un flux numérique, caractérisé en ce qu'il comporte en outre un moyen pour le traitement d'un flux original consistant à modifier au moins un des éléments simples du flux principal, l'équipement comportant en outre des moyens pour transférer l'information complémentaire correspondant à ladite modification.

L'invention se rapporte encore à un équipement pour la mise en oeuvre du procédé, comportant un décodeur selon ledit format nominal et des moyens de réception d'un flux numérique, caractérisé en ce qu'il comporte en outre un moyen de réception d'une information complémentaire associée au flux principal et un moyen pour la reconstruction du flux original par traitement dudit flux principal et de ladite information complémentaire.

L'invention concerne enfin un système pour la distribution d'images fixes numériques comportant au moins un équipement de diffusion d'images fixes encodées numériquement en ondelettes et une pluralité d'équipements de restitution et des moyens de télécommunication reliant l'équipement de diffusion et les équipements de restitution

caractérisé en ce que l'équipement de diffusion comporte un moyen pour modifier au moins un des éléments simples du flux principal, et en ce que les moyens de télécommunication sont composés d'un premier moyen pour la transmission d'une information principale codée en ondelettes et des seconds moyens pour transférer l'information complémentaire correspondant à ladite modification, l'équipement de restitution comportant des moyens de reconstruction du flux original par traitement dudit flux principal et de ladite information complémentaire et des moyens de décodage de l'information provenant du premier moyen de transmission.

PRINCIPE DE LA TRANSFORMEE EN ONDELETTES

La transformée en ondelettes d'une image (signal spatial à deux dimensions) consiste à appliquer sur l'image originale une succession de filtres passe-haut et passe-bas élaborés à partir des caractéristiques d'ondelettes d'analyse. L'opération de synthèse, qui consiste à reconstruire l'image à partir de l'ensemble ou d'un sous-ensemble des coefficients ondelettes, obéit à un schéma de filtrage inverse.

L'application d'une étape de transformée en ondelettes sur une image numérique (pouvant être composée d'une ou plusieurs matrices de valeurs réelles ou entières) est équivalente à une opération de filtrage sur les lignes et les colonnes de ou des matrices de valeurs suivie d'une diminution dyadique (division par deux) de la taille. Elle génère donc à chaque étape 4 nouvelles matrices de coefficients ondelettes, appelées sous-bandes et dont la largeur et la hauteur sont égales à la moitié de la largeur et la hauteur de la matrice transformée (progression dyadique). Soit une image I de largeur L et de hauteur H et de résolution **r**. L'application d'une étape de la transformée en ondelettes génère donc 4 matrices de coefficients ondelettes de dimension (L/2, H/2) : la sous-bande $LL_{r-1}$, résultat d'un filtrage passe bas horizontal (lignes) et vertical (colonnes) sur l'image I, la sous-bande $LH_{r-1}$, résultat d'un filtrage passe-bas horizontal et passe-haut vertical, la sous-bande $HL_{r-1}$, résultat d'un filtrage passe-haut horizontal et passe-bas vertical et la sous-bande $HH_{r-1}$, résultat d'un filtrage passe-haut horizontal et vertical.

On considère la transformée en ondelettes à R niveaux (équivalente à R étapes) d'une image. Une transformée en ondelettes à R niveaux est associée avec R+1 niveaux de résolution, numérotés de R à 0, avec R et 0 correspondant respectivement aux niveaux de résolution le plus fin (image initiale) et le plus grossier. Chaque sous-bande issue de la décomposition en ondelettes de l'image I est ainsi identifiée par son orientation (LL ou HL ou LH ou HH) et son niveau de résolution correspondant (0, ..., R).

L'image originale est considérée comme la sous-bande $LL_R$. A chaque niveau i de la décomposition en ondelettes (excepté le dernier i=0), la sous-bande $LL_i$ est ainsi décomposée en 4 nouvelles sous-bandes $LL_{i-1}$, $HL_{i-1}$, $LH_{i-1}$ et $HH_{i-1}$ et dont la taille est divisée par deux par rapport à $LL_i$. Le processus est itéré jusqu'à ce que la sous-bande $LL_0$ ait été obtenue. Ainsi, pour une transformée en ondelettes à R niveaux, 3R+1 sous-bandes de coefficients ondelettes sont générées : $LL_0$, $HL_1$, $LH_1$, $HH_1$, $HL_2$, $LH_2$, $HH_2$, ..., $HL_R$, $LH_R$, $HH_R$.

La reconstruction de l'image (synthèse) à partir des 3R+1 sous-bandes consiste à appliquer une opération de filtrage inverse sur les coefficients ondelettes suivie d'une augmentation dyadique de la taille. Une reconstruction progressive de l'image selon différents niveaux de résolution peut ainsi être opérée. En ajoutant par exemple à l'image reconstruite de résolution **r-1** les 3 sous-bandes de coefficients ondelettes $HL_{r-1}$, $LH_{r-1}$, $HH_{r-1}$ une nouvelle image de résolution **r** est obtenue.

L'unique sous-bande de coefficients ondelettes $LL_0$ est une approximation de l'image originale $LL_R$ et dont la résolution est $2^R$ fois inférieure à l'image originale.

Les 3R sous-bandes de coefficients ondelettes $HL_{r-1}$, $LH_{r-1}$, $HH_{r-1}$ correspondent quant à elles à des détails dans l'image, extraits au niveau de résolution r-1. Plus r est grand, plus les coefficients ondelettes de ces sous-bandes sont caractéristiques de détails de plus en plus fins (petits) dans l'image originale.

Les coefficients ondelettes issus de la transformée en ondelettes d'une image sont donc les caractéristiques locales d'une information fréquentielle. Plus r diminue, plus l'étendue spatiale caractérisée par un coefficient ondelette augmente (multiplication par un facteur 4 à chaque étape).

Une transformée en ondelettes à R niveaux d'une image génère une « image » d'approximation, de résolution $2^R$ inférieure et 3R « images » de détails à différentes résolutions (0 à R).

De par cette modélisation, le codage en ondelettes se caractérise par sa scalabilité spatiale et qualitative (ou granulaire), qui permet d'obtenir différentes résolutions pour les images encodées et permet aussi la réalisation d'un embrouillage adaptatif et progressif. Un exemple d'application est pour une séquence d'images fixes encodées avec la norme « Motion JPEG-2000 ». On applique un embrouillage progressif, de manière à ce que l'utilisateur commence à regarder la succession d'images non embrouillées. Ensuite, on commence à appliquer un embrouillage léger qu'on renforce de plus en plus, jusqu'à ce que les images deviennent entièrement embrouillées. Le but recherché est d'éveiller l'intérêt de l'utilisateur pour la succession d'images, mais en lui enlevant les droits de les regarder si ce dernier ne les a pas achetées. Une réalisation de cette application est d'embrouiller la succession d'images avec un ou plusieurs algorithmes donnés en modifiant progressivement les paramètres d'embrouillage pendant une durée de temps déterminée de manière à augmenter le désagrément, jusqu'à arriver à des images complètement embrouillées et non visibles.

Le procédé d'embrouillage d'images dont le schéma de compression fait intervenir des transformées en ondelettes consiste à introduire des perturbations sur les coefficients ondelettes appartenant à une ou plusieurs sousbandes différentes. On définit une perturbation comme étant un changement de valeur ou une permutation. Avantageusement, la perturbation peut être aussi une substitution par une valeur aléatoire ou calculée. L'amplitude et la position des coefficients ondelettes étant caractéristiques de l'information fréquentielle et spatiale présente dans l'image, et ceci à plusieurs niveaux de résolution, des perturbations fréquentielles et spatiales seront générées sur l'image reconstruite à partir des coefficients ondelettes modifiés. Ainsi, un coefficient de forte amplitude signale la présence d'une discontinuité locale d'intensité (détail) dans l'image dont la « taille » est mesurée en fonction de la résolution r de la sous-bande : les discontinuités les plus fines seront extraites pour des r grands et les plus grossières pour des r faibles. En modifiant l'amplitude et/ou la position d'un ou plusieurs coefficients à une ou plusieurs résolutions r, des perturbations visuelles sont introduites dans l'image reconstruite.

L'oeil humain est essentiellement sensible aux discontinuités dans l'image. Ce sont elles qui portent le maximum d'information visuelle. Ces discontinuités peuvent être dues à des propriétés physiques et/ou géométriques des objets présents dans l'image. En perturbant des coefficients ondelettes appartenant à une ou plusieurs des 3 x (R-1) sousbandes de détails LH, HL et HH, ce sont les informations primordiales à l'interprétation générale d'une image qui sont perturbées voire détruites. Avantageusement, les coefficients ondelettes de la bande $LL_0$ sont modifiés.

Un autre exemple d'embrouillage orienté spatialement consiste à modifier des coefficients ondelettes qui sont attachés à une entité « tuile-precinct » particulière. Une tuile est une composante résultante de la partition de l'image originale en plusieurs régions rectangulaires connexes. Un « precinct » (enceinte en français) est une zone rectangulaire regroupant trois sous-ensembles de coefficients ondelettes appartenant respectivement aux sous-bandes LH, HL et HH, pour une région spatiale limitée dans l'image et pour une résolution fixée. Un autre exemple d'embrouillage orienté spectralement consiste à modifier les coefficients ondelettes générés par la décomposition d'une des composantes spectrales ou colorimétriques de l'image.

Des perturbations orientées spectralement (choix d'une composante pour une image couleur) et/ou spatialement (choix d'une tuile et/ou d'un precinct) peuvent ainsi être appliquées.

Un autre exemple d'embrouillage consiste à travailler à différentes résolutions. La perturbation est appliquée sur des coefficients ondelettes appartenant à une ou des sous-bandes du même niveau de résolution r. De plus, les effets de la perturbation seront visibles sur chaque tuile de l'image reconstruite à partir des coefficients perturbés et de résolutions supérieures i.e r+1, r+2, ..., R. Plus r est petit, c'est-à-dire plus les coefficients ondelettes perturbés appartiennent à des sous-bandes de résolutions de plus en plus faibles, plus l'étendue des perturbations sera importante et pourront être d'autant plus visibles et gênantes quant à la compréhension et/ou l'exploitation de l'information originale contenue dans l'image.

De par sa nature, le codage en ondelettes procure de multiples possibilités d'embrouillage simple ou progressif, ceci en fonction de l'appartenance à une des sous-bandes des coefficients sur lesquels portent les perturbations : en modifiant des coefficients ondelettes appartenant à une sous-bande HL les discontinuités verticales de l'image reconstruite sont dégradées, en modifiant des coefficients appartenant à une sous-bande LH les discontinuités horizontales de l'image reconstruite sont dégradées, et en modifiant des coefficients appartenant à une sous-bande HH les discontinuités diagonales de l'image reconstruite sont dégradées.

Ainsi, en fonction de l'appartenance à une sous-bande des coefficients ondelettes sur lesquels porte la perturbation, l'aspect géométrique des défauts qui seront introduits peut être contrôlé.

Ainsi, en fonction de l'intensité et de la nature des perturbations introduites sur les coefficients ondelettes modifiés, substitués ou permutés, un embrouillage progressif et qualitatif de l'image peut être opéré.

L'embrouillage d'une image ou d'une succession d'images codées ondelettes peut être contrôlé selon 4 axes d'action : un axe spectral (choix d'une ou de plusieurs composantes), un axe spatial (choix d'une ou plusieurs tuiles, d'un ou plusieurs precincts), un axe de résolution (niveau r de résolution à embrouiller et étendue de l'embrouillage), et finalement un axe qualitatif (choix d'une ou plusieurs sous-bandes parmi LL, HL, LH ou HH, choix de la nature et de l'intensité des perturbations).

Un embrouillage adaptatif et progressif est effectué en fonction des paramètres de codage initiaux de l'image (nombre de composantes, nombre de tuiles, nombre de precincts, nombre R de niveaux de décomposition). Différents scénarii peuvent ainsi être envisagés : embrouillage d'une zone spécifique d'une image (choix d'une tuile d'un precinct), embrouillage d'une composante spécifique d'une image (luminance ou chrominance, rouge, vert ou bleu), embrouillage d'un certain niveau de résolution, embrouillage selon des directions variables (en fonction de la sous-bande perturbée). De nombreux scénarii combinant les précédentes variantes ou selon les 4 axes définis précédemment sont également possibles.

Les différentes perturbations et modifications des coefficients ondelettes envisagées sont par exemple la modification des valeurs des coefficients par seuillage, l'ajout/substitution de bruit, la permutation, la substitution par une ou plusieurs valeurs aléatoires, le changement de signe.

Une opération de seuillage consiste à forcer à une nouvelle valeur nommée *nval* un ou plusieurs coefficients

ondelettes $c_i$ si leurs images calculées par une fonction F (définie selon une méthode heuristique) est inférieure à un seuil $\tau$ fixé a priori :

$$\text{Si } F(c_i) \leq \tau \text{ alors } c_i = \text{nval.}$$

Différentes fonctions F, différents seuils $\tau$ et différentes *nval* peuvent être envisagés. En fonction de F et $\tau$ et nval, l'intensité de l'embrouillage est ajustable.

Une autre perturbation consiste à ajouter/substituer un bruit c'est-à-dire à ajouter/substituer à la valeur d'un ou plusieurs coefficients ondelettes ci un bruit aléatoire ou pseudo-aléatoire de loi statistique connue. En fonction de la puissance du bruit, l'intensité de la perturbation est ajustable.

Une autre perturbation consiste à permuter selon un schéma déterministe ou aléatoire la position des coefficients dans une sous-bande ou plusieurs sous-bandes fixées.

Dans la présente invention, l'embrouillage des images codées en ondelettes est effectué également de manière adaptative en fonction du profil du client. On applique une adaptation des paramètres et algorithmes d'embrouillage cités en fonction du profil du destinataire, en fonction du comportement du destinataire pendant la connexion au serveur (par exemple la régularité et l'acceptation des paiements), en fonction de ses habitudes (par exemple temps, heure de connexion), en fonction de ses caractéristiques (par exemple âge, sexe, religion, communauté), ou en fonction de données communiquées par un tiers (par exemple appartenance à des associations ou figurant sur des bases de données de consommateurs). On applique également une adaptation des paramètres et algorithmes d'embrouillage en fonction d'événements externes, par exemple, heure de diffusion, taux d'audience, événement sociaux-politiques, perturbations durant la connexion.

L'invention sera mieux comprise à l'aide de la description, faite ci-après à titre purement explicatif, d'un mode de réalisation de l'invention, en référence à la figure annexée :

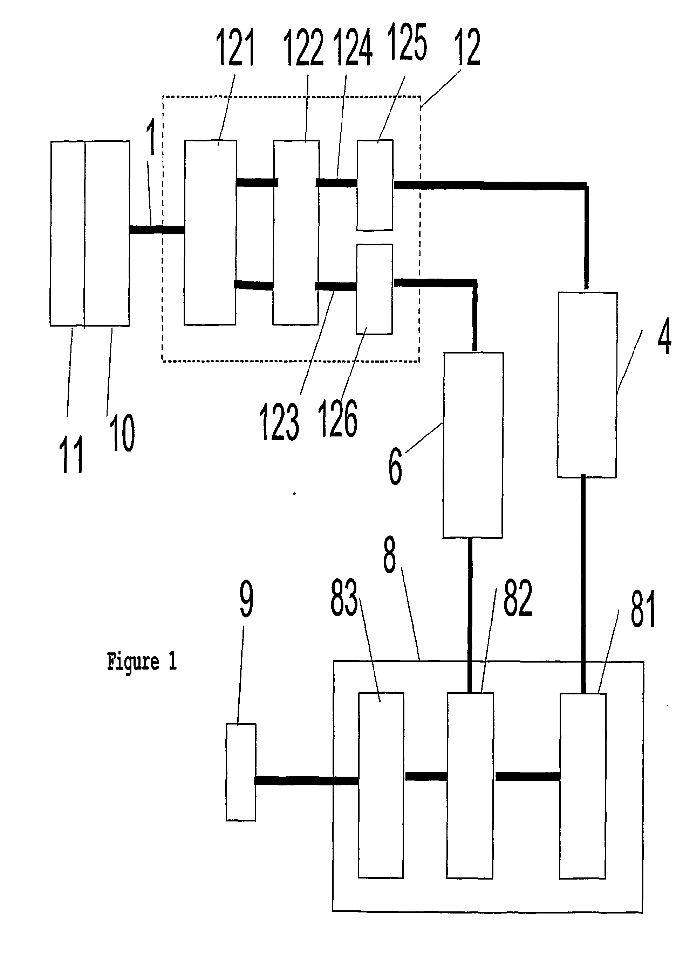

- la figure 1 illustre un mode de réalisation particulier du système client-serveur conforme à l'invention.

L'image encodée(1) selon le standard JPEG-2000 que l'on souhaite sécuriser est envoyée à un système d'analyse (121) et d'embrouillage (122) destinés à générer un flux principal modifié (124) et une information complémentaire (123).

Le flux d'origine (1) peut être directement sous forme numérique (10) ou sous forme analogique (11). Dans ce dernier cas, le flux analogique (11) est converti par un codeur non représenté en un format numérique (10). Dans la suite du texte, nous noterons (1) le flux binaire d'entrée.

Un premier flux (124) au format JPEG-2000, de format identique au flux numérique d'entrée (1) en dehors de ce que certains des coefficients, valeurs et/ou vecteurs ont été modifiés, est placé dans une mémoire tampon de sortie (125). L'information complémentaire (123), de format quelconque, contient les références des parties des éléments qui ont été modifiés et est placée dans le tampon (126). En fonction des caractéristiques du flux d'entrée (1), les systèmes d'analyse (121) et d'embrouillage (122) décident quel embrouillage appliquer et quels paramètres du flux modifier en fonction du type de codeur en ondelettes avec lequel il a été encodé (par exemple JPEG-2000, JJ2000 , JASPER, Kakadu, Motion JPEG-2000, Still Texture dans MPEG-4, etc.).

Le flux JPEG-2000 modifié est ensuite transmis à partir du tampon (125), via un réseau haut débit (4) de type hertzien, câble, satellite, etc., au client (8), et plus précisément dans sa mémoire (81) de type RAM, ROM, disque dur. Lorsque le client désire voir une image présente dans la mémoire (81), l'équipement destinataire (8) adresse une demande au serveur (12), qui vérifie les droits de cet utilisateur. Deux éventualités sont alors possibles :

- soit le destinataire (8) ne possède pas les droits nécessaires pour regarder l'image. Dans ce cas, le flux (124) généré par le système d'embrouillage (122) présent dans sa mémoire (81) est envoyé au système de synthèse (82), qui ne le modifie pas et le transmet à l'identique à un lecteur (83) et le contenu de l'image, fortement dégradée visuellement, est affiché sur l'écran de visualisation (9).

- soit le destinataire (8) possède les droits pour voir l'image. En fonction des droits de l'utilisateur, le serveur (12) transmet l'information complémentaire (123) appropriée qui est stockée dans le tampon (126) par la liaison (6), en totalité ou partiellement. Dans ce cas, le système de synthèse fait une demande de visualisation au serveur (12) contenant l'information complémentaire (123) nécessaire à la reconstitution de l'image originale (1). Le serveur (12) envoie alors par la liaison (6) via des réseaux de télécommunication (6) type ligne téléphonique analogique ou numérique, DSL (Digital Subscriber Line), BLR (Boucle Locale Radio), DAB (Digital Audio Broadcasting) ou de télécommunications mobiles numériques (GSM, GPRS, UMTS) l'information complémentaire (123) permettant la reconstitution de l'image initiale de façon à ce que le client (8) puisse regarder l'image. Le système de synthèse (82) procède alors au désembrouillage de l'image par la reconstruction du flux d'origine en combinant le flux principal modifié (124) et l'information complémentaire (123). L'image ainsi obtenue en sortie du système de synthèse (82) est alors transmise à un lecteur classique (83) qui l'affiche sur un écran (9).

La présente invention concerne plus particulièrement les modules d'analyse (121) et d'embrouillage (122), étant donné la complexité et la propriété de multicouches et scalabilité des flux encodés en ondelettes.

Un exemple d'embrouillage effectué par le module d'embrouillage est la saturation des coefficients ondelettes relatifs aux détails. Cette méthode consiste à forcer la valeur d'un ou plusieurs coefficients ondelettes c appartenant à une ou plusieurs des sous-bandes $HL_r$, $LH_r$, $HH_r$ (r étant fixé) à une valeur *nval* si leurs amplitudes (modules) sont supérieures à *seuil* :

$$\text{Si } |c| \geq seuil, \; c = nval$$

La valeur *seuil* influence le nombre de coefficients ondelettes modifiés dans une sous-bande : plus *seuil* est faible, plus le nombre de coefficient modifiés sera important et plus les dégradations seront grandes.

L'embrouillage est adaptatif en fonction de la sous-bande modifiée. La distribution de la valeur des coefficients ondelettes au sein d'une sous-bande peut être modélisée par une distribution laplacienne. Plus r est grand, plus la distribution s'étale, c'est-à-dire que l'on trouve de plus en plus de coefficients ondelettes de fortes amplitudes. Ainsi, pour un seuil fixé, le nombre de coefficients modifiés dans chaque sous-bande n'est pas constant.

La valeur *nval* règle l'intensité de la dégradation introduite sur l'image reconstruite. Plus la valeur absolue |*nval*| est grande, plus l'intensité visuelle des artefacts introduits sera importante.

Si les coefficients ondelettes modifiés appartiennent à la sous-bande HL, il apparaît des artefacts de direction verticale sur l'image reconstruite.

Si les coefficients ondelettes modifiés appartiennent à la sous-bande LH, il apparaît des artefacts de direction horizontale sur l'image reconstruite.

Si les coefficients ondelettes modifiés appartiennent à la sous-bande HH, il apparaît des artefacts de type damier sur l'image reconstruite.

La valeur de r règle quant à elle le niveau de résolution où sont introduits les défauts. Plus r est faible, plus la dégradation sera étendue spatialement dans l'image reconstruite.

L'information complémentaire (123) est alors composée des coefficients ondelettes c remplacés par *nval* et de leur position dans l'image transformée.

Un autre exemple d'embrouillage réalisé par le module (122) est la substitution des coefficients originaux par des coefficients ondelettes sur lesquels on rajoute du bruit. L'idée est d'ajouter/substituer aux coefficients d'une ou plusieurs bandes une valeur aléatoire ou pseudo-aléatoire générée selon une loi de probabilité fixée. Par exemple, dans le cas d'un bruit blanc additif,

$$ci = ci + \sigma \, ei,$$

avec ei variable aléatoire générée selon une loi N(0,1) (loi normale de moyenne nulle et de variance 1.0) et σ la puissance du bruit.

L'information complémentaire (123) est alors composée des caractéristiques du bruit ajouté et de la fonction de soustraction de ce bruit pour les coefficients modifiés.

Une autre réalisation d'embrouillage est la permutation de coefficients ondelettes. L'idée de base est de permuter de manière déterministe ou aléatoire les coefficients appartenant à une ou plusieurs sous-bandes. Les permutations peuvent être effectuées de manière déterministe (et signées par une matrice de permutation P) ou aléatoire sur des lignes ou des colonnes entières de coefficients, ou encore entre des sous-ensembles de coefficients. Par exemple des permutations déterministes des lignes dans les sous-bandes HL, HH et aléatoires des lignes dans des sous-bandes LH (détails horizontaux).

L'effet visuel obtenu est une forte dégradation de l'image dans les zones permutées, des effets de flou et de dégradations des contours.

Dans ce type d'embrouillage, l'information complémentaire (123) est constituée de fonctions de permutations inverses des permutations réalisées par le dispositif d'embrouillage (123).

Un autre mode de réalisation de l'embrouillage est de substituer aux coefficients ondelettes appartenant à un niveau de résolution r, des coefficients ondelettes aléatoires choisis selon une loi de probabilité uniforme. L'effet visuel obtenu est une destruction des détails de l'image aux résolutions r, r+1, ..., R provoquant ainsi une forte dégradation visuelle. Selon ce type d'embrouillage, l'information complémentaire (123) est constituée des coefficients ondelettes originaux et de leurs emplacements dans le flux initial.

La décomposition en ondelettes permet aussi d'effectuer un embrouillage localisé d'une image ou d'une succession d'images. L'idée est de dégrader, selon une des trois méthodes précédentes (seuillage, permutation, bruit) une partie de l'image, de manière ciblée, c'est-à-dire uniquement des zones d'intérêt qui rendent l'image non acceptable d'un point de vue perception visuelle humaine. De cette manière, on obtient un effet désagréable, tout en limitant la quantité d'information complémentaire. Un exemple de réalisation illustre le principe est décrit ci-dessous.

Soit (L,H) la dimension de l'image originale et (l,h) la dimension de la zone que l'on souhaite embrouiller sur l'image originale. Pour simplifier, on supposera que la zone à embrouiller est située au centre de l'image, c'est-à-dire la zone où en général se situe l'information la plus pertinente dans une image.

Soit r le niveau de résolution de la sous-bande de coefficients ondelettes que l'on souhaite modifier. Alors les formules suivantes indiquent les intervalles [is,js] et [ie,je] d'indices des coefficients ondelettes à modifier dans la sous-bande de résolution **r** considérée :

$$Is = nlr / 2 - ( l / 2^{r+1} ), \quad js = ncr / 2 - ( h / 2^{r+1} ),$$

$$Ie = nlr / 2 + ( l / 2^{r+1} ), \quad je = ncr / 2 + (h / 2^{r+1} ),$$

où (nlr,ncr) sont respectivement le nombre de lignes et de colonnes de la matrice des coefficients ondelettes dans la sous-bande considérée.

Les exemples cités sont non limitatifs et illustrent le principe des modifications sur un flux numérique issu de l'encodage en ondelettes d'une image dans le but de la protéger, ce principe étant aussi applicable à toute succession d'images numériques encodées en ondelettes.

## Revendications

1. Procédé pour la distribution sécurisée d'images fixes numériques selon un format nominal issu du codage numérique en ondelettes, représentées par un flux original constitué d'au moins un paquet relatif à l'organisation de la séquence binaire contenant au moins un bloc regroupant des coefficients codés numériquement selon un mode précisé à l'intérieur du flux concerné et utilisé par tous les décodeurs capables de le restituer ou de le décoder afin de pouvoir afficher correctement l'image **caractérisé en ce qu'**il comporte :

    • une étape préparatoire consistant à modifier au moins un desdits coefficients selon au moins une opération de substitution consistant en l'extraction de ce coefficient, suivi de son remplacement par une donnée appelée leurre,
    • une étape de transmission

        - d'un flux principal modifié conforme au format nominal, constitué par les blocs modifiés au cours de l'étape préparatoire et
        - par une voie séparée dudit flux principal, modifié d'une information numérique complémentaire, constituée des coefficients extraits du flux original et de la fonction de substitution permettant de reconstituer, sur l'équipement destinataire, le flux original à partir dudit flux principal modifié.

2. Procédé pour la distribution sécurisée d'images fixes numériques selon la revendication 1, **caractérisé en ce que** le flux principal modifié est enregistré ou disponible sur l'équipement destinataire préalablement à la transmission de l'information complémentaire sur l'équipement destinataire.

3. Procédé pour la distribution sécurisée d'images fixes numériques selon la revendication 1, **caractérisé en ce que** le flux principal modifié et l'information complémentaire sont transmis ensemble en temps réel au moment de la visualisation.

4. Procédé pour la distribution sécurisée d'images fixes numériques selon l'une au moins des revendications précédentes, **caractérisé en ce que** le format de flux nominal issu d'un codage en ondelettes est défini par un standard ou un codeur commun à une communauté d'utilisateurs.

5. Procédé pour la distribution sécurisée d'images fixes numériques selon l'une au moins des revendications précédentes, **caractérisé en ce qu'**il comporte une étape d'analyse d'une partie au moins du flux original, ladite étape d'analyse déterminant la nature des modifications à apporter aux dits coefficients.

6. Procédé pour la distribution sécurisée d'images fixes numériques selon l'une des revendications précédentes, **caractérisé en ce qu'**il comporte une étape préalable de conversion analogique/numérique sous un format structuré, le procédé étant appliqué à un signal visuel analogique.

7. Procédé pour la distribution sécurisée d'images fixes numériques selon l'une quelconque des revendications précédentes, **caractérisé en ce que** l'information complémentaire de modification comprend au moins une routine numérique apte à exécuter une fonction.

8. Procédé pour la distribution sécurisée d'images fixes numériques selon l'une au moins des revendications précédentes, **caractérisé en ce que** ladite étape préparatoire de modification est réalisée de façon adaptative sur ledit flux original en fonction d'une partie au moins des caractéristiques représentatives de la structure, du contenu et des paramètres de l'image originale, du profil du destinataire, et d'événements externes.

9. Procédé pour la distribution sécurisée d'images fixes numériques selon l'une au moins des revendications précédentes, **caractérisé en ce que** le flux principal modifié est conforme à la norme ou au standard natif du flux original.

10. Procédé pour la distribution sécurisée d'images fixes numériques selon l'une au moins des revendications précédentes, **caractérisé en ce que** la taille du flux principal modifié est strictement égale à la taille du flux original.

11. Procédé pour la distribution sécurisée d'images fixes numériques selon l'une au moins des revendications précédentes, **caractérisé en ce que** les modifications effectuées lors de ladite étape préparatoire sont réalisées directement sur les paquets du flux original regroupant des blocs de coefficients codés.

12. Procédé pour la distribution sécurisée d'images fixes numériques selon l'une au moins des revendications précédentes, **caractérisé en ce que** les modifications effectuées lors de ladite étape préparatoire sont réalisées sur au moins un des coefficients obtenu en décodant au moins un paquet du flux original.

13. Procédé pour la distribution sécurisée d'images fixes numériques selon l'une au moins des revendications précédentes, **caractérisé en ce que** les modifications sont effectuées sur au moins une des couches de scalabilité spatiale des images fixes codées en ondelettes.

14. Procédé pour la distribution sécurisée d'images fixes numériques selon l'une au moins des revendications précédentes, **caractérisé en ce que** les modifications sont effectuées sur au moins une des couches de scalabilité qualitative des images fixes codées en ondelettes.

15. Procédé pour la distribution sécurisée d'images fixes numériques selon l'une au moins des revendications précédentes, **caractérisé en ce que** des modifications sont effectuées sur au moins un ensemble d'au moins un coefficient en fonction des paramètres des modifications réalisées préalablement sur au moins un ensemble d'au moins un coefficient au sein du même flux.

16. Procédé pour la distribution sécurisée d'images fixes numériques selon l'une au moins des revendications précédentes, **caractérisé en ce que** lesdites images fixes constituent une succession d'images dans le temps.

17. Procédé pour la distribution sécurisée d'images fixes numériques selon la revendication 16, **caractérisé en ce que** ladite modification desdits coefficients est différente pour au moins deux images de ladite succession d'images.

18. Procédé pour la distribution sécurisée d'images fixes numériques selon l'une des revendications 16 ou 17, **caractérisé en ce que** ladite modification des coefficients d'une image de ladite succession d'images inclut la modification des coefficients des images précédentes dans l'ordre temporel de la succession en se fondant sur les propriétés de scalabilité spatiale et qualitative des transformations en ondelettes.

**19.** Procédé pour la distribution sécurisée d'images fixes numériques selon l'une au moins des revendications précédentes, **caractérisé en ce que** ladite modification desdits coefficients est appliquée sur une partie spatiale seulement de l'image, déterminée en se fondant sur les propriétés et les caractéristiques de la transformation en ondelettes.

**20.** Procédé pour la distribution sécurisée d'images fixes numériques selon l'une au moins des revendications précédentes, **caractérisé en ce que** ladite modification desdits coefficients est appliquée sur au moins une composante spectrale issue de la transformée en ondelettes afin de cibler ainsi la partie du flux visuel à embrouiller.

**21.** Procédé pour la restitution d'images fixes numériques encodées selon un procédé conforme à la revendication 1, **caractérisé en ce qu'**il comporte une étape supplémentaire de reconstitution dudit flux original comportant :

- une étape de reconstruction par application d'une fonction de reconstruction à partir d'une l'information complémentaire provenant d'une voie séparée du vecteur dudit flux principal modifié ;
- une étape de décodage dudit flux reconstruit par un procédé adapté audit format nominal.

**22.** Procédé pour la restitution d'images fixes numériques encodées selon la revendication 21, **caractérisé en ce que** la taille du flux reconstitué sur l'équipement destinataire est égale à la taille du flux original.

**23.** Procédé pour la restitution d'images fixes numériques encodées selon la revendication 21, **caractérisé en ce que** la taille du flux reconstitué sur l'équipement destinataire est différente de celle du flux original.

**24.** Procédé pour la restitution d'images fixes numériques encodées selon l'une des revendications 21 à 23, **caractérisé en ce que** l'information complémentaire permet de reconstruire le flux original à partir du flux principal modifié dans lequel l'ordre des paquets a été changé lors d'une opération de transcodage réalisée après l'étape préparatoire et avant l'étape de reconstruction.

**25.** Equipement pour la distribution sécurisée d'images fixes numériques selon un format de flux nominal, pour la mise en oeuvre du procédé conforme à la revendication 1, comportant un encodeur mettant en oeuvre un codage numérique en ondelettes selon ledit format nominal et des moyens de transmission d'un flux numérique, **caractérisé en ce qu'**il comporte en outre un moyen pour le traitement d'un flux original consistant à modifier au moins un des coefficients du flux original, l'équipement comportant en outre des moyens pour transférer l'information complémentaire correspondant à ladite modification.

**26.** Equipement pour la restitution d'images fixes numériques selon un format d'images nominal, pour la mise en oeuvre du procédé conforme à la revendication 1, comportant un décodeur selon ledit format nominal et des moyens de réception d'un flux numérique, **caractérisé en ce qu'**il comporte en outre un moyen de réception d'une information complémentaire associée au flux principal modifié et un moyen pour la reconstruction du flux original par traitement dudit flux principal modifié et de ladite information complémentaire.

**27.** Système pour la distribution d'images fixes numériques comportant au moins un équipement de diffusion d'images fixes encodées numériquement en ondelettes et une pluralité d'équipements de restitution et des moyens de télécommunication reliant l'équipement de diffusion et les équipements de restitution, **caractérisé en ce que** l'équipement de diffusion comporte un moyen pour modifier au moins un des coefficients du flux principal modifié, et **en ce que** les moyens de télécommunication sont composés d'un premier moyen pour la transmission d'une information principale codée en ondelettes et des seconds moyens pour transférer l'information complémentaire correspondant à ladite modification, l'équipement de restitution comportant des moyens de reconstruction du flux original par traitement dudit flux principal modifié et de ladite information complémentaire et des moyens de décodage de l'information provenant du premier moyen de transmission.

## Claims

**1.** Method of distributing still digital images in a secure manner based on a nominal format obtained by digital wavelet encoding, represented by an original stream made up of at least one packet relating to the organisation of the binary sequence containing at least one block grouping coefficients digitally encoded in a specified mode inside the stream in question and used by all the decoders capable of reconstituting it or decoding it to enable the image to be correctly displayed,
**characterised in that** it comprises:

• a preparatory step consisting in modifying at least one of said coefficients using at least one substitution operation involving the extraction of this coefficient, after which it is replaced by what is referred to as a decoy,
• a step of transmitting

- a modified main stream conforming to the nominal format, made up of the blocks that were modified during the preparatory step and,
- via a channel separate from said modified main stream, complementary digital information made up of coefficients extracted from the original stream and the substitution function enabling the original stream to be reconstituted on the addressee equipment from said modified main stream.

2. Method of distributing still digital images in a secure manner as claimed in claim 1, **characterised in that** the modified main stream is recorded or available on the addressee equipment before the complementary information is transmitted to the addressee equipment.

3. Method of distributing still digital images in a secure manner as claimed in claim 1, **characterised in that** the modified main stream and complementary information are transmitted together in real time at the time of viewing.

4. Method of distributing still digital images in a secure manner as claimed in at least one of the preceding claims, **characterised in that** the nominal stream format obtained by wavelet encoding is defined by a standard or a coder common to a community of users.

5. Method of distributing still digital images in a secure manner as claimed in at least one of the preceding claims, **characterised in that** it comprises a step of analysing a part of at least the original stream and said analysis step determines the nature of the modifications to be made to said coefficients.

6. Method of distributing still digital images in a secure manner as claimed in one of the preceding claims, **characterised in that** it comprises a prior step of analogue-to-digital conversion in a structured format and the method is applied to a visual analogue signal.

7. Method of distributing still digital images in a secure manner as claimed in any one of the preceding claims, **characterised in that** the complementary modification information contains at least one digital routine capable of running a function.

8. Method of distributing still digital images in a secure manner as claimed in at least one of the preceding claims, **characterised in that** said preparatory modification step is performed on said original stream adaptively as a function of at least some of the characteristics representative of the structure, content and parameters of the original image, addressee profile and external events.

9. Method of distributing still digital images in a secure manner as claimed in at least one of the preceding claims, **characterised in that** the modified main stream conforms to the norm or standard native to the original stream.

10. Method of distributing still digital images in a secure manner as claimed in at least one of the preceding claims, **characterised in that** the size of the modified main stream is strictly equal to the size of the original stream.

11. Method of distributing still digital images in a secure manner as claimed in at least one of the preceding claims, **characterised in that** the modifications made during said preparatory step are applied directly to the packets of the original stream grouping the blocks of encoded coefficients.

12. Method of distributing still digital images in a secure manner as claimed in at least one of the preceding claims, **characterised in that** the modifications made during said preparatory step are applied to at least one of the coefficients obtained by decoding at least one packet of the original stream.

13. Method of distributing still digital images in a secure manner as claimed in at least one of the preceding claims, **characterised in that** the modifications are made to at least one of the spatial scalability layers of the wavelet encoded still images.

14. Method of distributing still digital images in a secure manner as claimed in at least one of the preceding claims, **characterised in that** the modifications are made to at least one of the qualitative scalability layers of the wavelet encoded still images.

15. Method of distributing still digital images in a secure manner as claimed in at least one of the preceding claims, **characterised in that** modifications are made to at least one set of at least one coefficient as a function of the parameters of the modifications made beforehand to at least one set of at least one coefficient within the same stream.

16. Method of distributing still digital images in a secure manner as claimed in at least one of the preceding claims, **characterised in that** said still images constitute a succession of images in time.

17. Method of distributing still digital images in a secure manner as claimed in claim 16, **characterised in that** said modification of said coefficients is different for at least two images in said succession of images.

18. Method of distributing still digital images in a secure manner as claimed in one of claims 16 or 17, **characterised in that** said modification of the coefficients of an image in said succession of images includes the modification of the coefficients of the preceding images in the chronological order of the succession based on the spatial and qualitative scalability properties of the wavelet transformations.

19. Method of distributing still digital images in a secure manner as claimed in at least one of the preceding claims, **characterised in that** said modification of said coefficients is applied to a spatial part of the image only, determined on the basis of the properties and characteristics of the wavelet transformations.

20. Method of distributing still digital images in a secure manner as claimed in at least one of the preceding claims, **characterised in that** said modification of said coefficients is applied to at least one spectral component obtained from the wavelet transform in order to target the part of the visual stream to be scrambled.

21. Method of reconstituting still digital images encoded by means of a method as claimed in claim 1, **characterised in that** it comprises a supplementary step of reconstituting said original stream comprising:

- a step of reconstitution by applying a reconstruction function from complementary information derived from a separate channel from said modified main stream;
- a step of decoding said stream reconstructed by an appropriate method adapted to said nominal format.

22. Method of reconstructing encoded still digital images as claimed in claim 21, **characterised in that** the size of the stream reconstituted on the addressee equipment is identical to the size of the original stream.

23. Method of reconstructing encoded still digital images as claimed in claim 21, **characterised in that** the size of the stream reconstructed on the addressee equipment is different from that of the original stream.

24. Method of reconstructing encoded still digital images as claimed in one of claims 21 to 23, **characterised in that** the complementary information enables the original stream to be reconstructed from the modified stream in which the order of packets was changed during a transcoding operation applied after the preparatory step and before the reconstruction step.

25. Equipment for the secure distribution of still digital images in a nominal stream format for implementing the method as claimed in claim 1, comprising an encoder which applies digital wavelet encoding in said nominal format and means for transmitting a digital stream, **characterised in that** it further comprises a means for processing an original stream by modifying at least one of the coefficients of the original stream, the equipment also having means for transferring the complementary information corresponding to said modification.

26. Equipment for reconstituting still digital images in a nominal image format for implementing the method as claimed in claim 1, comprising a decoder using said nominal format and means for receiving a digital stream, **characterised in that** it also has means for receiving complementary information associated with the modified main stream and a means for reconstructing the original stream by processing said modified main stream and said complementary information.

27. System for distributing still digital images comprising at least one piece of equipment for transmitting still images which have been digitally wavelet encoded and a plurality of reconstituting equipment and telecommunication means linking the transmission equipment and reconstituting equipment, **characterised in that** the transmission equipment has a means for modifying at least one of the coefficients of the modified main stream, and **in that** the telecommunication means comprise a first means for transmitting main wavelet encoded information and second means for transferring complementary information corresponding to said modification, the reconstituting equipment having means for reconstructing the original stream by processing said modified main stream and said complementary information and means for decoding the information arriving from the first transmission means.

**Patentansprüche**

1. Verfahren für die gesicherte Verteilung von digitalen Standbildern in einem Nennformat, das sich aus der digitalen Wavelet-Codierung ergibt, die durch einen Originalstrom repräsentiert werden, der aus wenigstens einem Paket gebildet ist, das auf die Organisation der binären Folge bezogen ist, die wenigstens einen Block enthält, in dem digital codierte Koeffizienten in einem Modus gruppiert sind, der in dem betreffenden Strom präzisiert ist und von allen Decodierern verwendet wird, die ihn wiederherstellen oder decodieren können, um das Bild korrekt anzuzeigen, **dadurch gekennzeichnet, dass** es umfasst:

   - einen Vorbereitungsschritt, der darin besteht, wenigstens einen der Koeffizienten gemäß wenigstens einer Substitutionsoperation zu modifizieren, der darin besteht, diesen Koeffizienten zu extrahieren, gefolgt von seinem Austausch durch so genannte Köderdaten,
   - einen Schritt zum Übertragen
   - eines Hauptstroms, der gemäß dem Nennformat modifiziert ist und aus Blöcken gebildet ist, die während des Vorbereitungsschrittes modifiziert werden, und
   - einer komplementären digitalen Information auf einem von dem modifizierten Hauptstrom getrennten Weg, wobei diese Information gebildet ist aus Koeffizienten, die aus dem Originalstrom extrahiert sind, und aus der Substitutionsfunktion, die ermöglicht, bei der Zielanlage den Originalstrom anhand des modifizierten Hauptstroms wiederherzustellen.

2. Verfahren für die gesicherte Verteilung von digitalen Standbildern nach Anspruch 1, **dadurch gekennzeichnet, dass** der modifizierte Hauptstrom in der Zielanlage vor der Übertragung der komplementären Information zu der Zielanlage in der Zielanlage aufgezeichnet oder verfügbar gemacht wird.

3. Verfahren für die gesicherte Verteilung von digitalen Standbildern nach Anspruch 1, **dadurch gekennzeichnet, dass** der modifizierte Hauptstrom und die komplementäre Information gemeinsam in Echtzeit zum Zeitpunkt der Anzeige übertragen werden.

4. Verfahren für die gesicherte Verteilung von digitalen Standbildern nach wenigstens einem der vorhergehenden Ansprüche, **dadurch gekennzeichnet, dass** das Nennformat des Stroms, das sich aus einer Wavelet-Codierung ergibt, durch eine Norm oder einen Codierer, die bzw. der einer Gemeinschaft von Anwendern gemeinsam ist, definiert ist.

5. Verfahren für die gesicherte Verteilung von digitalen Standbildern nach wenigstens einem der vorhergehenden Ansprüche, **dadurch gekennzeichnet, dass** es einen Schritt zum Analysieren wenigstens eines Teils der Originalstroms umfasst, wobei der Analyseschritt die Art der Modifikationen, die an diesen Koeffizienten vorzunehmen sind, bestimmt.

6. Verfahren für die gesicherte Verteilung von digitalen Standbildern nach einem der vorhergehenden Ansprüche, **dadurch gekennzeichnet, dass** es einen vorhergehenden Analog/Digital-Umsetzungsschritt in einem strukturierten Format umfasst, wobei das Verfahren auf ein analoges visuelles Signal angewendet wird.

7. Verfahren für die gesicherte Verteilung von digitalen Standbildern nach einem der vorhergehenden Ansprüche, **dadurch gekennzeichnet, dass** die komplementäre Modifikationsinformation wenigstens eine digitale Routine enthält, die eine Funktion ausführen kann.

8. Verfahren für die gesicherte Verteilung von digitalen Standbildern nach wenigstens einem der vorhergehenden Ansprüche, **dadurch gekennzeichnet, dass** der vorbereitende Modifikationsschritt in adaptiver Weise an dem Originalstrom in Abhängigkeit von wenigstens einem Teil der die Struktur repräsentierenden Charakteristiken, vom Inhalt und von den Parametern des Originalbildes, vom Profil des Empfängers und von externen Ereignissen verwirklicht wird.

9. Verfahren für die gesicherte Verteilung von digitalen Standbildern nach wenigstens einem der vorhergehenden Ansprüche, **dadurch gekennzeichnet, dass** der modifizierte Hauptstrom in Übereinstimmung mit der ursprünglichen Norm oder dem ursprünglichen Standard des Originalstroms ist.

10. Verfahren für die gesicherte Verteilung von digitalen Standbildern nach wenigstens einem der vorhergehenden Ansprüche, **dadurch gekennzeichnet, dass** die Größe des modifizierten Hauptstroms streng gleich der Größe des Originalstroms ist.

11. Verfahren für die gesicherte Verteilung von digitalen Standbildern nach wenigstens einem der vorhergehenden Ansprüche, **dadurch gekennzeichnet, dass** die im Vorbereitungsschritt ausgeführten Modifikationen direkt an den Paketen des Originalstroms, in denen Blöcke codierter Koeffizienten gruppiert sind, vorgenommen wird.

12. Verfahren für die gesicherte Verteilung von digitalen Standbildern nach wenigstens einem der vorhergehenden Ansprüche, **dadurch gekennzeichnet, dass** die im Vorbereitungsschritt ausgeführten Modifikationen an wenigstens einem der Koeffizienten verwirklicht werden, der durch Decodieren wenigstens eines Pakets des Originalstroms erhalten wird.

13. Verfahren für die gesicherte Verteilung von digitalen Standbildern nach wenigstens einem der vorhergehenden Ansprüche, **dadurch gekennzeichnet, dass** die Modifikationen an wenigstens einer der Schichten mit räumlicher Skalierbarkeit der durch Wavelets codierten Standbilder vorgenommen werden.

14. Verfahren für die gesicherte Verteilung von digitalen Standbildern nach wenigstens einem der vorhergehenden Ansprüche, **dadurch gekennzeichnet, dass** die Modifikationen an wenigstens einer der Schichten mit qualitativer Skalierbarkeit der durch Wavelets codierten Standbilder vorgenommen werden.

15. Verfahren für die gesicherte Verteilung von digitalen Standbildern nach wenigstens einem der vorhergehenden Ansprüche, **dadurch gekennzeichnet, dass** die Modifikationen wenigstens an einer Gesamtheit aus wenigstens einem Koeffizienten als Funktion von Parametern der im Voraus verwirklichten Modifikationen an wenigstens einer Gesamtheit wenigstens eines Koeffizienten innerhalb desselben Stroms vorgenommen werden.

16. Verfahren für die gesicherte Verteilung von digitalen Standbildern nach wenigstens einem der vorhergehenden Ansprüche, **dadurch gekennzeichnet, dass** die Standbilder eine zeitliche Folge von Bildern bilden.

17. Verfahren für die gesicherte Verteilung von digitalen Standbildern nach Anspruch 16, **dadurch gekennzeichnet, dass** die Modifikation der Koeffizienten für wenigstens zwei Bilder der Folge von Bildern verschieden ist.

18. Verfahren für die gesicherte Verteilung von digitalen Standbildern nach einem der Ansprüche 16 oder 17, **dadurch gekennzeichnet, dass** die Modifikation der Koeffizienten eines Bildes der Folge von Bildern die Modifikation der Koeffizienten vorhergehender Bilder in der zeitlichen Reihenfolge der Folge, die auf den Eigenschaften der räumlichen und der qualitativen Skalierbarkeit der Wavelet-Transformationen basiert, umfasst.

19. Verfahren für die gesicherte Verteilung von digitalen Standbildern nach wenigstens einem der vorhergehenden Ansprüche, **dadurch gekennzeichnet, dass** die Modifikation der Koeffizienten nur auf einen räumlichen Anteil des Bildes angewendet wird, der auf der Grundlage der Eigenschaften und der Charakteristiken der Wavelet-Transformation bestimmt wird.

20. Verfahren für die gesicherte Verteilung von digitalen Standbildern nach wenigstens einem der vorhergehenden Ansprüche, **dadurch gekennzeichnet, dass** die Modifikation der Koeffizienten auf wenigstens eine Spektralkomponente angewendet wird, die sich aus der Wavelet-Transformierten ergibt, um somit den zu verwürfelnden visuellen Teil des Stroms anzusprechen.

21. Verfahren für die Wiederherstellung von digitalen Standbildern, die gemäß einem Verfahren nach Anspruch 1 codiert sind, **dadurch gekennzeichnet, dass** es einen zusätzlichen Schritt des Wiederherstellens des Originalstroms umfasst, der umfasst:

- einen Schritt des Rekonstruierens durch Anwenden einer Rekonstruktionsfunktion ausgehend von einer komplementären Information, die auf einem vom Vektor des modifizierten Hauptstroms getrennten Weg ankommt;
- einen Schritt des Decodierens des rekonstruierten Stroms durch ein an das Nennformat angepasstes Verfahren.

**22.** Verfahren für die Wiederherstellung von codierten digitalen Standbildern nach Anspruch 21, **dadurch gekennzeichnet, dass** die Größe des in der Zielanlage wiederhergestellten Stroms gleich der Größe des Originalstroms ist.

**23.** Verfahren für die Wiederherstellung von codierten digitalen Standbildern nach Anspruch 21, **dadurch gekennzeichnet, dass** die Größe des in der Zielanlage wiederhergestellten Stroms von jener des Originalstroms verschieden ist.

**24.** Verfahren für die Wiederherstellung von codierten digitalen Standbildern nach einem der Ansprüche 21 bis 23, **dadurch gekennzeichnet, dass** die komplementäre Information ermöglicht, den Originalstrom anhand des modifizierten Hauptstroms zu rekonstruieren, in dem die Reihenfolge von Paketen bei einer Transcodierungsoperation geändert worden ist, die nach dem Vorbereitungsschritt und vor dem Rekonstruktionsschritt ausgeführt wird.

**25.** Anlage für die gesicherte Verteilung von digitalen Standbildern in einem Nennformat des Stroms zur Ausführung des Verfahrens nach Anspruch 1, die umfasst: einen Codierer, der eine digitale Codierung in Wavelets gemäß dem Nennformat ausführt, und Mittel zum Übertragen eines digitalen Stroms, **dadurch gekennzeichnet, dass** sie außerdem ein Mittel für die Verarbeitung eines Originalstroms umfasst, die darin besteht, wenigstens einen der Koeffizienten des Originalstroms zu modifizieren, wobei die Anlage außerdem Mittel umfasst, um die komplementäre Information, die der Modifikation entspricht, zu übertragen.

**26.** Anlage für die Wiederherstellung von digitalen Standbildern in einem Nenn-Bildformat für die Ausführung des Verfahrens nach Anspruch 1, die umfasst: einen Decodierer für das Nennformat und Mittel zum Empfangen eines digitalen Stroms, **dadurch gekennzeichnet, dass** sie außerdem ein Mittel zum Empfangen einer komplementären Information, die dem modifizierten Hauptstrom zugeordnet ist, und ein Mittel für die Rekonstruktion des Originalstroms durch Verarbeiten des modifizierten Hauptstroms und der komplementären Information umfasst.

**27.** System für die Verteilung von digitalen Standbildern, das wenigstens eine Anlage zum Versenden von durch Wavelets digital codierten Standbildern und mehrere Wiederherstellungsanlagen sowie Telekommunikationsmittel, die die Sendeanlage und die Wiederherstellungsanlagen verbindet, umfasst, **dadurch gekennzeichnet, dass** die Sendeanlage ein Mittel zum Modifizieren wenigstens eines der Koeffizienten des modifizierten Hauptstroms umfasst und dass die Telekommunikationsmittel gebildet sind aus einem ersten Mittel zum Übertragen einer durch Wavelets codierten Hauptinformation und zweiten Mitteln zum Übertragen der komplementären Information, die der Modifikation entspricht, wobei die Wiederherstellungsanlage Mittel zum Rekonstruieren des Originalstroms durch Verarbeiten des modifizierten Hauptstroms und der komplementären Information und Mittel zum Decodieren der Information, die von den ersten Übertragungsmitteln stammt, umfasst.

Figure 1

## RÉFÉRENCES CITÉES DANS LA DESCRIPTION

**Documents brevets cités dans la description**

- EP 1011269 A1

- EP 0920209 A1

**Littérature non-brevet citée dans la description**

- **Zeng W et al.** Efficient Frequency Domain Video Scrambling for Content Access Control. *ACM Multimedia Proceedings of the International Conference,* Octobre 1999